# EUROPÄISCHE PATENTSCHRIFT

(11) **EP 0 363 683 B1**
(45) Veröffentlichungstag und Bekanntmachung des Hinweises auf die Patenterteilung: **17.11.1994**
(21) Anmeldenummer: 89117224.9
(22) Anmeldetag: 18.09.1989
(51) Int. Cl.: C01B 17/90, C22B 34/12

(54) **Verfahren zur Gewinnung höherkonzentrierter Schwefelsäurelösungen durch Aufbereitung verdünnter sulfathaltiger Schwefelsäurelösungen**
Process for the recovery of greatly concentrated sulfuric-acid solutions by the treatment of diluted sulfate-containing sulfuric-acid concentrations
Procédé d'obtention de solution d'acide sulfurique plus concentrées par traitement de solutions d'acide sulfurique diluées contenant des sulfates

(30) Priorität: 26.09.1988 CH 3567/88
(43) Veröffentlichungstag der Anmeldung: 18.04.1990
(73) Patentinhaber: Sulzer Chemtech AG, 8404 Winterthur (CH)
(72) Erfinder: Mauer, Josef, D-5090 Leverkusen 3 (DE); Bansal, Parmanand, CH-8121 Benglen (CH)
(74) Vertreter: Heubeck, Bernhard

(56) Entgegenhaltungen:
- EP-A- 0 133 505
- DE-A- 2 618 122
- DE-A- 2 630 196
- DE-B- 1 129 140
- DE-B- 1 173 074

## Beschreibung

Die Erfindung betrifft ein Verfahren zur Gewinnung von höherkonzentrierten Schwefelsäurelösungen mit geringerem Metallsalzgehalt durch Aufbereitung verdünnter eisen(II)sulfathaltiger Schwefelsäurelösungen aus der Titandioxid-Produktion, wobei die verdünnte Schwefelsäurelösung mit einer Ausgangsschwefelsäurekonzentration von höchstens 28 Gew.-% in wenigstens einer Vorkonzentrationsstufe vorkonzentriert und das erhaltene Vorkonzentrat in wenigstens einer Weiterkonzentrationsstufe weiterkonzentriert wird, wobei das Vorkonzentrat mit einer Schwefelsäurelösung mit einer höheren Schwefelsäurekonzentration als die der vorkonzentrierten Schwefelsäure gemischt wird, und die nach dem Mischen ausgefällten Metallsalze von der aufkonzentrierten Schwefelsäure abgetrennt werden.

Ein solches Verfahren ist beispielsweise aus der DE-A-2 618 122 bekannt und dient vorzugsweise zur Aufarbeitung der bei der Hydrolyse von Titansulfatlösungen nach Abtrennung des Titanoxidhydrates in grossen Mengen anfallenden verdünnten Schwefelsäurelösung, die neben einem Schwefelsäuregehalt von 10 - 30 Gew.-%, in der Regel von 20 - 23 Gew.-%, grosse Mengen an Eisen(II)sulfat und andere Metallsalze enthält. Aus Gründen des Umweltschutzes und der Verfahrensökonomie ist es wünschenswert, den Schwefelsäureanteil dieser sogenannten Dünnsäure wiederverwenden zu können, insbesondere wieder in die Titandioxidfabrikation zurückführen zu können. Dazu muss diese Dünnsäure auf die für den Titanerzaufschluss erforderliche Konzentration hochkonzentriert und die in ihr enthaltenen Metallsalze möglichst weitgehend abgetrennt werden. Das in DE-A-2 618 122 beschriebene Verfahren, bei dem die Vorkonzentration der Dünnsäure nur bis zu einer Konzentration von 25 - 32 Gew.-% vorgenommen wird und das Vorkonzentrat mit 90 - 96%iger Schwefelsäure auf 60 - 70% aufkonzentriert wird, hat sich als geeignet erwiesen, die bei der Titandioxidproduktion anfallende Dünnsäure so aufzuarbeiten, dass sie energetisch günstig recykliert und im Prozess, d.h. beim Titanrohstoffaufschluss wiederverwendet werden kann. Das bekannte Verfahren stellt jedoch noch nicht das Optimum der Aufbereitung bezüglich der in der konzentrierten Schwefelsäurelösung verbliebenen Metallsalze und bezüglich des Energieverbrauchs, d.h. der Verfahrensökonomie, dar.

Aus der DE-A-2 630 196 ist ein ähnliches Verfahren bekannt, bei dem die Vorkonzentration bis 25 - 55% (in den Beispielen 26 und 32%) vorgenommen, und dem Vorkonzentrat auf 45 - 70% (im Beispiel 65%) aufkonzentrierte Säure beigemischt wird. Zusätzlich wird Grünsalz beigemischt, so dass die Fremdstoffkonzentration auf über 25% steigt, was zum Anbacken ausgefällter Sulfate und zum Verstopfen der Leitungen führen kann. Durch Beimischung von 65%iger Säure zum 26 bzw. 32%igen Vorkonzentrat kann zudem keine optimale Filtrationstemperatur erreicht werden.

Aus der DE-B-1 129 140 ist weiterhin ein Verfahren zur Aufarbeitung von Abfallschwefelsäuren zur Wiederverwendung bei der Titanpigmentherstellung bekannt, bei dem die Vorkonzentration bis 70% erfolgt, bevor über 95% hochkonzentrierte Schwefelsäure zugemischt wird. Die beträchtliche Menge bei der Vorkonzentration ausfallender Metallsulfate muss nötigenfalls durch eine Zwischenfiltrierung bereits vor dem Mischer abgetrennt werden. Die Konzentration von über 80%, z.B.94% nach dem Mischen ist zudem relativ ungünstig, abgesehen vom erheblichen Energieverbrauch.

Die Erfindung will hier Abhilfe schaffen und bezieht sich auf die Aufgabe, ein möglichst ökonomisches Verfahren zur Aufbereitung und Wiederverwendung verdünnter Schwefelsäurelösungen aus der Titandioxid-Produktion zu schaffen, bei welchem in der aufbereiteten und konzentrierten Schwefelsäurelösung ein möglichst geringer Restgehalt an Metallsalzen verbleibt und wobei der Energiebedarf wesentlich vermindert ist.

Erfindungsgemäss wird diese Aufgabe dadurch gelöst, dass die verdünnte Schwefelsäurelösung bis zu einer Schwefelsäurekonzentration von etwa 60 bis höchstens 65 Gew.-% vorkonzentriert wird, dass die vorkonzentrierte Schwefelsäurelösung bis zu einer Schwefelsäurekonzentration von über 70 bis 88 Gew.-% unter Energiezufuhr und unter Abtrennung der ausgefällten Metallsalze weiterkonzentriert wird, und dass ein Teil der auf über 70 bis 88 Gew.-% weiterkonzentrierten Schwefelsäure nach Abtrennung der Metallsalze direkt mit der vorkonzentrierten Schwefelsäure gemischt und im Kreislauf geführt wird.

Im Gegensatz zu dem aus DE-A-2 618 122 bekannten Verfahren, bei dem die Vorkonzentration bis zu einem Schwefelsäuregehalt von 25 - 32 Gew.-% vorgenommen wird, wobei angestrebt wird, die Vorkonzentration nur soweit vorzunehmen, dass kein Eisensulfat ausfällt, wird nach dem erfindungsgemässen Verfahren eine Ausfällung einer bestimmten Eisensulfatmenge von höchstens 25 Gew.-%, bezogen auf Salz und Schwefelsäure, in Kauf genommen. Während bisher davon ausgegangen wurde, dass suspendiertes Eisensulfat einen kontinuierlichen Prozess stören könnte, geht die Erfindung von der überraschenden Erkenntnis aus, dass eine gewisse Menge ausgefällten Eisensulfates und anderer Salze von höchstens 25 Gew.-% den Prozess bei laufendem Betrieb noch nicht stört, was eine Vorkonzentration bis über 60% erlaubt.

Die in der DE-B-1 129 140 vorgesehene Vorkonzentration auf 65 - 70% in einer oder zwei Stufen führt dagegen zu einer deutlich störenden Ausfällung von Eisensulfat von mehr als 25 Gew.-%, das nötigenfalls durch eine aufwendige Zwischenfiltration vor dem Mischen mit höchstkonzentrierter Schwefelsäure entfernt werden muss.

Ein weiterer Unterschied zum Stand der Technik ist der, dass anstelle einer auf 90 - 96 Gew.-% hochkonzentrierten Schwefelsäure eine Schwefelsäurelösung mit einer Konzentration von nur 70 - 88 Gew.-% abgetrennt und der vorkonzentrierten Schwefelsäure beigemischt wird. Während bei dem bekannten Verfahren die Aufkonzentration im wesentlichen durch Beimischung hochkonzentrierter, über 90%iger Schwefelsäure erfolgt, wobei die Hochkonzentration in einer weiteren, der Aufkonzentration nachgeschalteten Stufe mit hohem Energieverbrauch erfolgt, wird gemäss dem erfindungsgemässen Verfahren ein Teil der aufkonzentrierten Schwefelsäurelösung zurückgeführt und der vorkonzentrierten Schwefelsäurelösung zugemischt. Um dabei eine hinreichende Konzentration der aufkonzentrierten Schwefelsäure von 70 - 88 Gew.-% zu erreichen, wird der Aufkonzentrationsstufe nach der Abtrennung der Metallsalze die zur Aufkonzentration notwendige Energie zugeführt. Nach dem erfindungsgemässen Verfahren entfällt also ein wesentlicher Teil der Hochkonzentration der gesamten aufkonzentrierten Schwefelsäure auf über 90 Gew.-%.

Dabei ist es jedoch vorteilhaft, wenigstens einen Teil der nicht für die Rückführung und Zumischung zum Vorkonzentrat erforderlichen aufkonzentrierten Schwefelsäure in einer kleiner dimensionierten Hochkonzentrationsstufe auf die für die Verwendung im Titanerzaufschluss erforderliche Konzentration zu bringen. Dabei wird die inzwischen gewonnene Erkenntnis berücksichtigt, dass zum Aufschluss bestimmter Titanrohstoffe, z.B. Titanschlacke, anstelle der früher verwendeten 96%-igen Schwefelsäure oder gar von Oleum auch im Konzentrationsbereich unter 90%, beispielsweise mit 86%-iger Schwefelsäure erfolgreich und ökonomisch gearbeitet werden kann. Nach dem erfindungsgemässen Verfahren wird also der Energiebedarf deutlich vermindert.

### Beispiel:

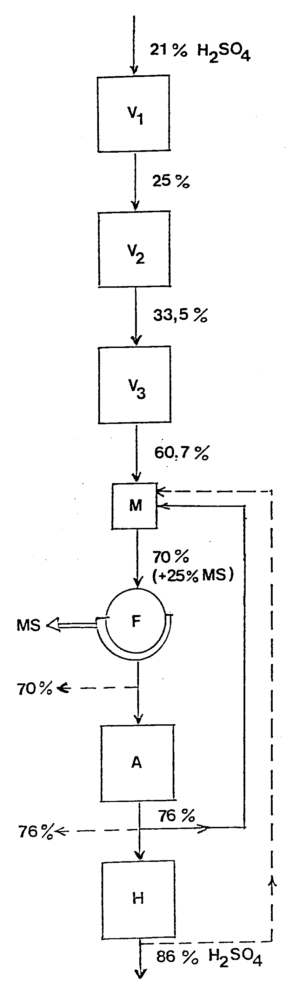

In der Figur ist ein Schema eines Beispieles des erfindungsgemässes Verfahrens dargestellt.

Bei diesem Beispiel wird Dünnsäure mit einem Schwefelsäuregehalt von 21 Gew.-% und einem Metallsalzgehalt von 12 Gew.-%, vorzugsweise bestehend aus Eisen(II)sulfat, Magnesiumsulfat und Beimengungen anderer Metallsulfate, in einer ersten Vorkonzentrationsstufe V₁, beispielsweise einem Vakuumverdampfer auf eine Schwefelsäurekonzentration von z.B. 25 Gew.-%, höchstens 28 Gew.-%, z.B. unter Verwendung von Abfallwärme, etwa aus dem TiO₂-Herstellungsprozess vorkonzentriert, und anschliessend in einer zweiten Vorkonzentrationsstufe V₂, z.B. einem zweiten Vakuumverdampfer auf eine Konzentration von ca. 33,5%, höchstens 50 Gew.-%. In einer anschliessenden dritten Vorkonzentrationsstufe V₃, z.B. einem dritten Vakuumverdampfer wird die Schwefelsäurelösung weiter auf 60,7 Gew.-% eingedampft. Hierbei fallen ein Teil der Metallsulfate, vorzugsweise Eisen(II)sulfatmonohydrat aus und verbleiben in der Suspension. Die Konzentration dieser Metallsulfate überschreitet 25 Gew.-% nicht, und es zeigt sich, dass bei kontinuierlichem Betrieb hierbei noch keine Störungen durch Abscheidungen von Metallsulfaten eintreten.

Anschliessend wird die auf 60,7 Gew.-% vorkonzentrierte Schwefelsäure in einen Mischer M eingebracht, wo sie mit rückgeführter 76%iger Schwefelsäure in einem solchen Anteil gemischt wird, dass sich eine Schwefelsäurekonzentration von ca. 70 Gew.-% einstellt.

Hierbei fällt der wesentliche Teil in Lösung verbliebener Metallsalze aus, insbesondere auch störende Chrom- und Vanadiumsalze. Anschliessend werden die gefällten Metallsalze in einem Drehfilter F oder einem geeigneten Pressfilter abgetrennt, nötigenfalls nach Kühlung der Suspension, so dass die als Filtrat austretende und in einer Aufkonzentrationsstufe A unter Energiezufuhr aufkonzentrierte 76%-ige Schwefelsäure relativ salzarm ist. Etwas mehr als die Hälfte dieser 76%-igen Schwefelsäure wird in den Mischer M zurückgeführt und dem Vorkonzentrat zugemischt. Der Rest der 76%-igen Schwefelsäure wird in einer Hochkonzentrationsstufe H auf eine Schwefelsäurekonzentration von 85 - 88 Gew.-%, z.B. 86 Gew.-% hochkonzentriert, welche zum Aufschluss von Titanerz wiederverwendet wird. Ein weiterer Teil der Säure kann bei Bedarf sofort nach der Filtration bei 70 Gew.% oder auch nach der Aufkonzentration auf 76 Gew.-% zu anderweitiger Verwendung abgeführt werden.

Da aus filtrationstechnischen Gründen ein Konzentrationsbereich von 70 - 72 Gew.-% für die Abtrennung der Filtersalze günstig ist, empfiehlt sich die Zugabe aufkonzentrierter Säure in einer solchen Menge und Konzentration, in Anpassung an die Herkunft der Dünnsäure, dass die Filtration in den günstigsten Bereich gelegt wird.

Zur Verbessung der Energiebilanz dient der in den einzelnen Konzentrationsstufen V₁, V₂, V₃, A und H, die als Vakuumverdampfer oder in anderer geeigneter Art ausgeführt sein können, anfallende Wasserdampf als Heizmittel in einer der vorangehenden Konzentrations- bzw. Verdampferstufen, so dass nur eine geringe Menge Frischdampf erforderlich ist.

Bei einer Variante dieses Beispieles eines erfindungsgemässen Verfahrens kann dem Mischer M statt oder zusätzlich zu aufkonzentrierter Schwefelsäure 86%ige hochkonzentrierte Schwefelsäure in einen solchen Verhältnis zugeführt werden, dass sich ebenfalls eine Schwefelsäurekonzentration von 70 Gew.-% einstellt.

Die Energiekosten lagen bei diesem Beispiel bei DM 71,35/t TiO₂ (in Energiepreisen vom August 1988). Die Investitionen sinken etwa um die Hälfte, und das Filter kann um ca 70% kleiner ausgelegt sein.

### Vergleichsbeispiel:

Bei einem Beispiel des in der DE-A-2 618 122 beschriebenen Verfahrens wird in einer Vorkonzentrationsstufe 21%ige Dünnschwefelsäure mit 12 Gew.-% Salzgehalt auf 29 Gew.-% konzentriert. Im Mischer wird 92%ige Schwefelsäure zugesetzt, so dass eine Konzentration von 70 Gew.-% erreicht wird. Die ausgefallenen Salze werden mit einem Pressfilter abgetrennt. In einer zweistufigen Hochkonzentrationseinheit wird die Schwefelsäure auf 92 Gew.-% eingedampft. Ein Teilstrom davon geht zum Mischer zurück, der Rest wird in die Produktion zurückgeführt.

Bei diesem Verfahren fallen in der Vorkonzentrationsstufe noch keine Metallsalze aus. Der Haupteindampfprozess wird in die Hochkonzentrierung verlegt, nachdem die meisten Metallsalze entfernt wurden.

Die Vorkonzentrationsstufe wird durch Brüden aus der Hochkonzentration beheizt, während die Hochkonzentration mit Thermoöl oder Gas durchgeführt wird.

Die Energiekosten betragen bei diesem vorbekannten Verfahren DM 125.-/t TiO₂, also 75% mehr als bei dem vorgängig beschriebenen Beispiel des erfindungsgemässen Verfahrens.

## Patentansprüche

1. Verfahren zur Gewinnung von höherkonzentrierten Schwefelsäurelösungen mit geringerem Metallsalzgehalt durch Aufarbeitung verdünnter eisen(II)sulfathaltiger Schwefelsäurelösungen aus der Titandioxid-Produktion, wobei die verdünnte Schwefelsäurelösung mit einer Ausgangsschwefelsäurekonzentration von höchstens 28 Gew.-% in wenigstens einer Vorkonzentrationsstufe (V₁, V₂, V₃) vorkonzentriert und das erhaltene Vorkonzentrat in wenigstens einer Weiterkonzentrationsstufe (A, H) weiterkonzentriert wird, wobei das Vorkonzentrat mit einer Schwefelsäurelösung mit einer höheren Schwefelsäurekonzentration als die der vorkonzentrierten Schwefelsäure gemischt wird (M), und die ausgefällten Metallsalze (MS) von der aufkonzentrierten Schwefelsäure abgetrennt werden (F), dadurch gekennzeichnet, dass die verdünnte Schwefelsäurelösung bis zu einer Schwefelsäurekonzentration von etwa 60 bis höchstens 65 Gew.-% vorkonzentriert wird, dass die vorkonzentrierte Schwefelsäurelösung (V₃) bis zu einer Schwefelsäurekonzentration von über 70 bis 88 Gew.-% unter Energiezufuhr und unter Abtrennung (F) der ausgefällten Metallsalze (MS) weiterkonzentriert wird, und dass ein Teil der auf 70 - 88 Gew.-% weiterkonzentrierten Schwefelsäurelösung nach Abtrennung der Metallsalze direkt mit der vorkonzentrierten Schwefelsäurelösung gemischt (M) und im Kreislauf geführt wird.

2. Verfahren nach Anspruch 1, dadurch gekennzeichnet, dass die Vorkonzentration bis zu einer solchen Konzentration vorgenommen wird, dass höchstens 25 Gew.-% Metallsulfat bezogen auf Salz und Schwefelsäure, im Konzentrat ausfällt.

3. Verfahren nach Anspruch 1 oder 2, dadurch gekennzeichnet, dass die Weiterkonzentration wenigstens zunächst in einer Aufkonzentrationsstufe (A) bis zu einer Konzentration von über 70 bis 85 Gew.-% erfolgt und ein Teil der aufkonzentrierten Schwefelsäure (A) mit der vorkonzentrierten Schwefelsäure (V₃) gemischt wird (M).

4. Verfahren nach Anspruch 3, dadurch gekennzeichnet, dass wenigstens ein Teil der nicht zurückgeführten aufkonzentrierten Schwefelsäurelösung (A) in einer folgenden Hochkonzentrationsstufe (H) auf eine Schwefelsäurekonzentration von 85 - 88 Gew.-% hochkonzentriert wird.

5. Verfahren nach Anspruch 1 oder 2, dadurch gekennzeichnet, dass die Weiterkonzentration in einer Aufkonzentrationsstufe (A) bis 70-85 Gew.-% und in einer Hochkonzentrationsstufe (H) bis 85-88 Gew.-% erfolgt und wenigstens ein Teil der hochkonzentrierten Schwefelsäure mit der vorkonzentrierten Schwefelsäure gemischt wird (M).

6. Verfahren nach einem der Ansprüche 1 - 5, dadurch gekennzeichnet, dass die Vorkonzentration in mehreren hintereinandergeschalteten Vorkonzentrationsstufen (V₁, V₂, V₃) vorgenommen wird.

7. Verfahren nach einem der Ansprüche 1 - 6, dadurch gekennzeichnet, dass der in wenigstens einer Konzentrationsstufe anfallende Wasserdampf zur Vorheizung wenigstens einer vorangehenden Konzentrationsstufe verwendet wird.

8. Verfahren nach einem der Ansprüche 1 - 7, dadurch gekennzeichnet, dass die Konzentration in wenigstens einer Stufe (V₁, V₂, V₃, A, H) mit einem Vakuumverdampfer vorgenommen wird.

9. Verfahren nach einem der Ansprüche 1 - 8, dadurch gekennzeichnet, dass die Abtrennung der Metallsalze (MS) mit einem Drehfilter oder Pressfilter (F) erfolgt.

## Claims

1. A process for the production of relatively highly concentrated sulphuric acid solutions having a relatively low metal salt content by the preparation of dilute sulphuric acid solutions containing iron(II) sulphate from the production of titanium dioxide, wherein the dilute sulphuric acid solution having an initial sulphuric acid concentration of at most 28 % by weight is preconcentrated in at least one preconcentration stage (V₁, V₂, V₃) and the preconcentrate obtained is further concentrated in at least one further concentration stage (A, H), wherein the preconcentrate is mixed (M) with a sulphuric acid solution having a higher sulphuric acid concentration than that of the preconcentrated sulphuric acid, and the precipitated metal salts (MS) are separated (F) from the concentrated sulphuric acid,
**characterised in that** the diluted sulphuric acid solution is preconcentrated to a sulphuric acid concentration of roughly 60 to at most 65 % by weight,
**in that** the preconcentrated sulphuric acid solution (V₃)is further concentrated to a sulphuric acid concentration of over 70 to 88 % by weight with the supply of energy and the separation (F) of the precipitated metal salts (MS),
**and in that** after the separation of the metal salts a part of the sulphuric acid solution further concentrated to 70 - 88 % by weight is mixed (M) directly with the preconcentrated sulphuric acid solution and conveyed in the circulation.

2. A process according to Claim 1,
**characterised in that** the preconcentration is performed to such a concentration that at most 25 % by weight metal sulphate, related to salt and sulphuric acid, precipitates in the concentrate.

3. A process according to Claim 1 or 2,
**characterised in that** the further concentration is performed at least first of all in a concentration stage (A) to a concentration of over 70 to 85 % by weight and a part of the concentrated sulphuric acid (A) is mixed (M) with the preconcentrated sulphuric acid (V₃).

4. A process according to Claim 3,
**characterised in that** at least one part of the concentrated sulphuric acid solution not returned (A) is highly concentrated in a following high concentration stage (H) to a sulphuric acid concentration of 85 - 88 % by weight.

5. A process according to Claim 1 or 2,
**characterised in that** the further concentration is performed in a concentration stage (A) up to 70 - 85 % by weight in a high concentration stage (H) up to 85 - 88 % by weight and at least one part of the highly concentrated sulphuric acid is mixed (M) with the preconcentrated sulphuric acid.

6. A process according to one of Claims 1 to 5,
**characterised in that** the preconcentration is performed in several preconcentration stages (V₁, V₂, V₃) connected one behind the other.

7. A process according to one of Claims 1 to 6,
**characterised in that** the water vapour produced in at least one concentration stage is used to preheat at least one preceding concentration stage.

8. A process according to one of Claims 1 to 7,
**characterised in that** the concentration is performed with a vacuum evaporator in at least one stage (V₁, V₂, V₃, A, H).

9. A process according to one of Claims 1 to 8,
**characterised in that** the separation of the metal salts (MS) is performed with a rotary filter or pressure filter (F).

## Revendications

1. Procédé de production de solutions d'acide sulfurique de concentration élevée, à teneur réduite en sels métalliques, par traitement de solutions diluées d'acide sulfurique contenant du sulfate de fer(II) provenant de la production de dioxyde de titane, la solution diluée d'acide sulfurique ayant au départ une concentration en acide sulfurique au maximum égale à 28 % en poids étant préalablement concentrée dans au moins un étage de préconcentration (V₁, V₂, V₃) et le pré-concentré obtenu étant encore concentré dans au moins un étage (A, H) de poursuite de la concentration, le pré-concentré étant mélangé (M) avec une solution d'acide sulfurique de plus forte concentration en cet acide que l'acide sulfurique préconcentré, et les sels métalliques (SM) précipités sont séparés (F) de l'acide sulfurique concentré, caractérisé en ce que la solution diluée d'acide sulfurique est préconcentrée jusqu'à une teneur en acide sulfurique d'environ 60 à un maximum de 65 % en poids, en ce que la solution préconcentrée d'acide sulfurique (V₃) est encore concentrée jusqu'à une concentration en acide sulfurique de plus de 70 jusqu'à 88 % en poids avec apport d'énergie et séparation (F) des sels métalliques (SM) précipités, et en ce qu'une partie de la solution d'acide sulfurique encore concentrée à 70 - 88 % en poids est mélangée (M) directement avec la solution préconcentrée d'acide sulfurique et est recyclée.

2. Procédé suivant la revendication 1, caractérisé en ce que la pré-concentration est effectuée jusqu'à une concentration telle qu'au maximum 25 % en poids de sulfate métallique, par rapport au sel et à l'acide sulfurique, précipitent dans le concentré.

3. Procédé suivant la revendication 1 ou 2, caractérisé en ce que la poursuite de la concentration est effectuée au moins tout d'abord dans un étage de concentration (A) jusqu'à une concentration de plus de 70 à 85 % en poids et une partie de l'acide sulfurique (A) concentré est mélangée (M) avec l'acide sulfurique (V₃) préconcentré.

4. Procédé suivant la revendication 3, caractérisé en ce qu'au moins une partie de la solution d'acide sulfurique (A) concentrée non recyclée est fortement concentrée dans un étage de forte concentration (H) jusqu'à une concentration en acide sulfurique de 85 à 88 % en poids.

5. Procédé suivant la revendication 1 ou 2, caractérisé en ce que la poursuite de la concentration est effectuée dans un étage de concentration (A) jusqu'à 70-85 % en poids et dans un étage de forte concentration (H) jusqu'à 85-88 % en poids et une partie au moins de l'acide sulfurique hautement concentré est mélangée (M) avec l'acide sulfurique préconcentré.

6. Procédé suivant l'une des revendications 1 à 5, caractérisé en ce que la préconcentration est effectuée dans plusieurs étages de préconcentration (V₁, V₂, V₃) montés en série.

7. Procédé suivant l'une des revendications 1 à 6, caractérisé en ce que la vapeur d'eau présente au moins dans un étage de concentration est utilisée pour le préchauffage d'au moins un étage de concentration précédent.

8. Procédé suivant l'une des revendications 1 à 7, caractérisé en ce que la concentration est effectuée dans au moins un étage (V₁, V₂, V₃, A, H) avec un évaporateur à vide.

9. Procédé suivant l'une des revendications 1 à 8, caractérisé en ce que la séparation des sels métalliques (SM) est effectuée avec un filtre tournant ou un filtrepresse (F).
